# EUROPEAN PATENT SPECIFICATION

(11) **EP 0 254 274 B1**
(45) Date of publication and mention of the grant of the patent: **09.11.1994**
(21) Application number: 87110554.0
(22) Date of filing: 21.07.1987
(51) Int. Cl.: B29C 33/56, C08L 83/04, B22C 3/00, B28B 7/00

(54) **Method of releasing**
Entformungsverfahren
Méthode de démoulage

(30) Priority: 22.07.1986 JP 172480/86
(43) Date of publication of application: 27.01.1988
(73) Proprietor: Toray Silicone Co., Ltd., Chuo-ku Tokyo 103 (JP)
(72) Inventor: Ona, Isao, Kimitsu-gun Chiba Prefecture (JP); Kurusu, Hidetoshi, Ichihara-shi Chiba Prefecture (JP); Tanaka, Osamu, Ichihara-shi Chiba Prefecture (JP)
(74) Representative: Spott, Gottfried, Dr.

(56) References cited:
- EP-A- 138 192
- EP-A- 0 228 575
- JP-A- 5 343 854
- RO-B- 72 569
- CHEMICAL ABSTRACTS, vol. 89, no. 10, 1978, abstract no. 75896t, Columbus, Ohio,US; & JP-A-53 034 854
- CHEMICAL ABSTRACTS, vol. 96, no. 16, 1980, abstract no. 124345t, Columbus,Ohio, US;

## Description

The present invention relates to a method for obtaining release from a solid substrate using a release agent whose major silicone component is an organopolysiloxane microemulsion. More specifically, the present invention relates to a method for obtaining release from a solid substrate using a release agent whose major silicone component is an organopolysiloxane microemulsion which is obtained by emulsion polymerization.

Compositions whose major silicone component is an emulsion obtained by the emulsion polymerization of organopolysiloxane are known in the art as release agents for the molding of rubber and thermoplastic and thermosetting resins from Japanese Patent Publication No. 34-2041. However, such release agents are organopolysiloxane emulsions which have average particle sizes 0.3 micrometers, and the stability of such emulsions is unsatisfactory as a consequence. That is, they have an unsatisfactory mechanical stability when the release agent is stored in a tank and circulated by pump. They have an unsatisfactory stability with respect to dilution with water and when the quantity of release agent is adjusted. In addition, they have an unsatisfactory stability with regard to the blending of additives such as mica or talc especially when used for tire release. As a consequence, the emulsion is broken and the organopolysiloxane readily separates. When the release agent is used in this separated state, it clogs the nozzle when sprayed, and provides poor release.

From EP-A 0 228 575, an intermediate document which is only relevant according to Article 54 (3) EPC, a polydiorganosiloxane microemulsion is known, the use of which, however, is not disclosed. In this document it is pointed to a standard emulsion which are used for the formation of released coatings.

JP-A 53-034854 discloses an emulsifiable silicone composition which comprises for example 100 parts of a dimethylpolysiloxane, 200 parts of a different polysiloxane and 500 parts of another polysiloxane, wherein the mixture is stirred, water is added and a stable emulsion is obtained. There is no hint to an emulsion polymerization or the formation of a microemulsion.

EP-A 0 138 192 is concerned with a method of preparing a polyorganosiloxane emulsion having small particle size. For this purpose a polyorganosiloxane which contains polar groups, a surfactant and sufficient water to obtain a translucent mixture are mixed.

The object of the present invention is to eliminate the above problems by using a release agent whose major silicone component is an organopolysiloxane microemulsion obtained by emulsion polymerization, wherein the emulsion is a microemulsion having particle sizes of ≦ 0.15 micrometers and whose viscosity upon breaking the emulsion, is at least 100 centistokes at 25°C, and which thus has an excellent mechanical stability, an excellent dilution stability, and an excellent stability in blending.

The aforesaid object can be achieved by means of a method for obtaining release from a solid substrate comprising
(I) emulsion polymerizing a crude emulsion comprising a cyclic organopolysiloxane of the formula (R₂SiO)ₙ, surfactant and water, wherein the groups R are identical or different alkyl, substituted alkyl, alkenyl, aryl or substituted aryl groups and n is an integer having a value of 3 to 10, to provide an organopolysiloxane microemulsion, wherein the average particle size of said microemulsion after polymerization is equal to or less than 0.15 micrometers measured as described herein and its viscosity, after the emulsion is broken, is at least 100 mm²/s (centistokes) at 25°C,
(II) preparing a silicone release agent having said organopolysiloxane microemulsion as silicone component,
(III) coating said release agent on the surface to be released,
(IV) moulding an article of rubber, or a thermoplastic or thermosetting resin against said coated substrate, and
(V) removing the article from said substrate.

The organopolysiloxane microemulsion operative in the present invention is obtained by the emulsion polymerization of an organopolysiloxane, and the average particle size of this emulsion after emulsion polymerization must be 0.15 micrometers and preferably is ≦ 0.12 micrometers. The mechanical stability, dilution stability, and blending stability become unsatisfactory when the average particle size exceeds 0.15 micrometers. The viscosity of the organopolysiloxane extracted after emulsion polymerization should be at least 100 centistokes, preferably ≧ 1,000 centistokes, and more preferably 10,000 to 300,000 centistokes at 25°C. A satisfactory releasability cannot be imparted to the molded article when the viscosity of this organopolysiloxane is less than 100 centistokes.

This emulsion can be produced, for example, by an emulsion polymerization in which a crude emulsion, comprising an organopolysiloxane having a low degree of polymerization plus surfactant and water, is gradually dripped into an aqueous solution containing a catalytic quantity of a polymerization catalyst and an emulsifying agent.

Cyclic organopolysiloxanes with the following formula 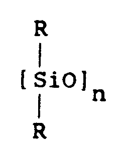
is a typical example of organopolysiloxane used as the starting material in the crude emulsion. In this formula, R is a monovalent hydrocarbon group, and it is exemplified by alkyl groups such as methyl, ethyl, propyl, and butyl; substituted alkyl groups such as 2-phenylethyl, 2-phenylpropyl, and 3,3,3-trifluoropropyl; alkenyl groups such as vinyl and propenyl; aryl groups such as phenyl and tolyl; and substituted aryl groups. The groups R in the molecule may be identical or different, and n is an integer having a value of 3 to 10. Said cyclic organopolysiloxane may consist of the single species, or may be a combination of two or more species. In addition to these cyclic organopolysiloxanes, it is also permissible to add small quantities of hydroxyl-terminated diorganopolysiloxanes or hydrolyzable group-containing silane, for example, N-(2-aminoethyl)-3-aminopropyltrimethoxysilane, trimethoxyvinylsilane or gamma-glycidoxypropyltrimethoxysilane. Also, hexaorganodisiloxane end blocker can be added to regulate the viscosity.

A surfactant is necessary in order to convert said organopolysiloxane into the crude emulsion, and this includes the anionic, cationic, and nonionic surfactants.

Examples of anionic surfactants are alkylbenzenesul fonic acids such a hexylbenzenesulfonic acid, octylbenzenesul fonic acid, decylbenzenesulfonic acid, dodecylbenzenesulfonic acid, cetylbenzenesulfonic acid, and myristylbenzenesulfonic acid; the sulfate esters of polyoxyethylene monoalkyl ethers, for example, CH₃(CH₂)₆CH₂O(C₂H₄O)₂SO₃H, CH₃(CH₂)₈CH₂O(C₂H₄O)₈SO₃H, CH₃(CH₂)₁₉CH₂O(C₂H₄O)₄SO₃H, and CH₃(CH₂)₈CH₂C₆H₄O(C₂H₄O)₂SO₃H; and alkylnaphthylsulfonic acids.

Examples of cationic surfactants are quaternary ammonium hydroxides such as octyltrimethylammonium hydroxide, dodecyltrimethylammonium hydroxide, hexadecyltrimethylammonium hydroxide, octyldimethylbenzylammonium hydroxide, decyldimethyl benzylammonium hydroxide, didodecyldimethylammonium hydroxide, dioctadecyldimethylammonium hydroxide, beef tallow trimethylam monium hydroxide, and coco trimethylammonium hydroxide; and their salts.

Examples of nonionic surfactants are polyoxyalkylene alkyl ethers, polyoxyalkylene alkylphenol ethers, polyoxyalkylene alkyl esters, polyoxyalkylene sorbitan alkyl esters, polyethylene glycol, polypropylene glycol, and diethylene glycol.

With the exception of the combination of anionic surfactant with cationic surfactant, the surfactant may be used as the single species or as the combination of two or more species. It is permissible to use a single species of anionic surfactant, or the combination or two or more species of anionic surfactants, or a single species of nonionic surfactant, or the combination of two or more species of nonionic surfactants, or a single species of cationic surfactant, or the combination of two or more species of cationic surfactants, or the combination of two or more species respectively selected from anionic and nonionic surfactants, or the combination of two or more species respectively selected from cationic and nonionic surfactants.

The surfactant is used in the crude emulsion in a quantity that provides for the formation of an emulsion, and this will vary with the type of surfactant. As a consequence, the quantity is not specifically restricted, but is preferably 2 ∼ 10 wt%.

Water is used in the crude emulsion preferably in a quantity which gives an organopolysiloxane concentration of 10 ∼ 40 wt%.

The crude emulsion is prepared by mixing the above organopolysiloxane, surfactant, and water to homogeneity, and passing this mixture through an emulsifying device such as an homogenizer, colloid mill or line mixer.

Microemulsion operative in the present invention is obtained by an emulsion polymerization in which said crude emulsion is gradually dripped into a separately prepared aqueous solution containing a catalytic quantity of a polymerization catalyst plus a surfactant.

Said polymerization catalyst encompasses anionic catalysts and cationic catalysts. The anionic catalysts are exemplified by mineral acids such as hydrochloric acid and sulfuric acid, as well as by the alkylbenzenesulfonic acids, sulfate esters of polyoxyethylene monoalkyl ethers, and alkyl naphthylsulfonic acids given above as examples of surfactants. The cationic catalysts are exemplified by alkali metal hydroxides, for example, potassium hydroxide and sodium hydroxide, as well as by the quaternary ammonium hydroxides and their salts given above as examples of surfactants.

The surfactant to be used in the present case corresponds to those given as examples of the surfactant to be used for the crude emulsion. Accordingly, when an alkylbenzenesulfonic acid, sulfate ester of polyoxyethylene monoalkyl ether, alkyl naphthylsulfonic acid or quaternary ammonium hydroxide or salt thereof is used as the surfactant, it can also function as the polymerization catalyst. Considering the ionic character of the emulsion, when an anionic surfactant is used for the crude emulsion, an anionic catalyst and an anionic and/or nonionic surfactant should be used to prepare the microemulsion. When a cationic surfactant is used in the crude emulsion, a cationic catalyst and a cationic surfactant and/or nonionic surfactant should be used to prepare the microemulsion. When a nonionic surfactant is used in the crude emulsion, an anionic or cationic catalyst may be used in microemulsion production: an anionic surfactant and/or nonionic surfactant should be used with an anionic catalyst, while a cationic surfactant and/or nonionic surfactant should be used with a cationic catalyst.

The surfactant in the aqueous solution of catalyst plus surfactant is to be used at 5 to 50 weight parts and preferably 25 to 45 weight parts per 100 weight parts organopolysiloxane in the crude emulsion. The catalyst is to be used at 0.2 to 2 weight parts and preferably 0.5 to 1 weight parts per 100 weight parts organopolysiloxane in the crude emulsion.

The temperature of the aqueous catalyst solution is preferably 40 to 95°C. When the crude emulsion is dripped in, the rate of dropwise addition will vary with the type and concentration of the catalyst and with the temperature of the aqueous catalyst solution. Dropwise addition may be rapid when the catalyst concentration is high or when the temperature of the aqueous catalyst solution is high, but dropwise addition is preferably conducted over ≧ 30 minutes to obtain emulsions with smaller particle sizes. After dropwise addition, emulsion polymerization is conducted at 0 to 90°C until the specified viscosity is achieved to afford a microemulsion having an average particle size ≦ 0.15 micrometers. After emulsion polymerization, the polymerization catalyst is preferably neutralized with alkali in the case of an anionic polymerization catalyst, or with acid in the case of a cationic polymerization catalyst. Furthermore, while the organopolysiloxane concentration in emulsion polymerization is not specifically restricted, it is preferably 5 to 50 wt%.

A more detailed account of the preparation of the microemulsions useful of this invention can be found in U.S. Patent Application Serial Number 809,090, filed December 12, 1985, in the name of Daniel Graiver and Osamu Tanaka and entitled "Methods for Making Polydiorganosiloxane Microemulsions".

Inorganic powders, for example, mica, talc, zinc oxide, zinc carbonate, and calcium carbonate; emulsion stabilizers such as lecithin, methylcellulose, and polyvinyl alcohol; silanes such as organooximesilanes, organoacetoxysilanes, and mercapto group-containing silanes; pigments; antimolds; and preservatives can be added as necessary to the release agent of the present invention unless such adversely affects the object of the invention.

The release agent of the present invention obtained as above, after dilution with water to the desired concentration (preferably to a silicone concentration of 0.1 to 5.0 wt%), is then uniformly sprayed or coated on the surface to be released.

Materials to which the inventive release agent may be applied are, for example, thermosetting resins such as phenolic resins, epoxy resins, polyester resins, phenol novolac resins, urea resins, and melamine resins; thermoplastic resins such as polyvinyl chlorides, polyethylenes, polypropylenes, vinyl acetates, copolymers of the preceding. nylons, polyesters, polystyrenes, acrylonitrile/styrene copolymers, acrylonitrile/butadiene/styrene copolymers, polyacrylate esters, polycarbonates, polyurethanes, and polyacetals; and rubbers such as natural rubber, isoprene, styrene-butadiene rubber, and chloroprene.

The invention will be explained by means of illustrative examples. In the examples, parts = weight parts, and the viscosity is the value measured at 25°C.

### Example 1

850 parts water, 10 parts dodecylbenzenesulfonic acid, and 600 parts cyclic dimethylsiloxane tetramer were placed in a 2 L beaker and then stirred to homogeneity. A crude emulsion was obtained by passing this mixture 4 times through an homogenizer at a pressure of 400 kg/cm². Separately, 1,300 parts water and 180 parts dodecylbenzenesulfonic acid were placed in a 5 L four neck- flask and then maintained at a liquid temperature of 85°C with slow stirring. The crude emulsion was then gradually dripped into this aqueous solution of dodecylbenzenesulfonic acid over a 2 hour period. After the addition, the mixture was cooled and then maintained at 48°C for 2 hours to conduct emulsion polymerization. After polymerization, the pH was adjusted to 7.0 using 50 wt% aqueous sodium hydroxide to obtain a transparent emulsion. The average particle size in the obtained emulsion, as measured using a Quasi-Elastic Light Scattering Model M2000 from the Malrer Co. (USA), was 0.05 micrometers (emulsion A). The microemulsion was broken using methanol and the oil was extracted: it was found to be a hydroxyl group-terminated dimethylpolysiloxane having a viscosity of 60,000 centistokes. The transmittance measured at 580 nanometers was 96%.

In order to prepare an inner-surface release agent for passenger tire molding, 15.0 parts emulsion A, 0.5 parts lecithin, 0.1 part carboxymethylcellulose, and 30.0 parts water were placed in a container and stirred at 500 rpm for 2 hours with a four-blade stirrer. 14.4 parts 300-mesh mica and 40.0 parts 100-mesh talc were then added, followed by stirring for an additional 3 hours.

The spraying characteristics were excellent when this was sprayed, using a hand gun, onto an unvulcanized butyl rubber tire inner liner (15 cm x 15 cm x 0.52 cm rubber sheet). It was confirmed, by evaluation with the fingers, that adhesion of the mica and talc was excellent and that the lubricity was also excellent, thus indicating the useability as an inner-surface release agent for passenger tire molding.

This release agent was placed in a 200 cm³ reagent bottle and stored for 1 month. Absolutely no de-emulsification was observed.

### Comparison Example 1

670 parts water, 20 parts dodecylbenzenesulfonic acid, and 300 parts cyclic dimethylsiloxane tetramer were stirred to homogeneity, and then passed 4 times through a homogenizer at a pressure of 400 kg/cm². The resulting emulsion was maintained at 85°C for 2 hours and then at 48°C for 2 hours to produce an emulsion-polymerized emulsion (emulsion B) having an average particle size of 0.3 micrometers.

To prepare an inner-surface release agent for passenger tire molding, 15.0 parts of the obtained emulsion B, 0.5 parts lecithin, 0.1 part carboxymethylcellulose, and 30.0 parts water were placed in a container and then stirred at 500 rpm for 2 hours using a four-blade stirrer. While stirring was continued for another 3 hours after the addition of 14.4 parts 300-mesh mica and 40.0 parts 100-mesh talc, a large amount of floating oil was observed, indicating destruction of the emulsion.

The spraying characteristics were poor (the nozzle was clogged) when this inner-surface release agent was sprayed using a hand gun onto an unvulcanized butyl rubber tire inner liner (15 cm x 15 cm x 0.52 cm rubber sheet). Furthermore, the oil was adhered spotwise over the rubber sheet of the inner liner and this release agent was thus unusable as an inner-surface release agent for passenger tire molding.

This release agent was also placed in a 200 cm³ reagent bottle and stored for 1 month. Separation of the oil was observed.

### Example 2

760 parts water was added to 40 parts emulsion A (as in Example 1) to prepare an outer-surface tire molding release agent having a silicone fraction of 1 wt%. 500 cm³ was placed in a household juicer mixer and processed for 60 minutes at 4,000 rpm. The condition of the emulsion after processing was inspected visually: no floating oil or adhesion of oil at the glass walls was observed, indicating its useability as an outer-surface release agent for tire molding.

### Comparison Example 2

760 parts water was added to 40 parts emulsion B (as in Comparison Example 1) to prepare an outer-surface tire molding release agent having a silicone fraction of 1 wt%. 500 cm³ was placed in a household juicer mixer and processed for 60 minutes at 4,000 rpm. The condition of the emulsion after processing was inspected visually: floating oil and adhesion of oil at the glass walls were observed, indicating its unsuitability as an outer-surface release agent for tire molding.

### Example 3

400 parts cyclic dimethylsiloxane tetramer, 10 parts hexamethyldisiloxane, 560 parts water, and 30 parts of the ethylene oxide adduct (45 moles) of octylphenol were mixed to homogeneity, and this was then passed three times through an homogenizer at a pressure of 450 kg/cm² to produce a crude emulsion. Separately, 130 parts dodecylbenzenesulfonic acid and 870 parts water were placed in a 3 L four-neck flask, dissolved, and then maintained at a liquid temperature of 80°C with slow stirring. The crude emulsion was then slowly dripped into this aqueous solution of dodecylbenzenesulfonic acid over 2 hours. Following addition and cooling, emulsion polymerization was conducted by maintenance at the same temperature for 3 hours. After polymerization, the pH was adjusted to 7.0 using 10 wt% aqueous sodium hydroxide. The product was a transparent microemulsion (emulsion C) having an average particle size of 0.08 micrometers and a transmittance of 91% at 580 nanometers. The emulsion was broken with methanol, and the extracted oil was found to be a trimethylsilyl-terminated dimethylpolysiloxane having a viscosity of 280 centistokes.

760 parts water was added to 40 parts of this emulsion C to prepare an outer-surface tire molding release agent having a silicone fraction of 1 wt%. 500 cm³ of this was placed in a household juicer mixer and then processed for 60 minutes at 4,000 rpm. The condition of the emulsion after processing was inspected visually: no floating oil or oil adhering at the glass walls was observed, indicating its useability as an outer-surface release agent for tire molding.

### Example 4

400 parts octamethylcyclotetrasiloxane, 570 parts water and 30 parts of a 50/50 (weight) mixture of beef tallow trimethyl ammonium chloride and dicoco dimethylammonium were mixed to homogeneity, and the mixture was then passed three times through an homogenizer at a pressure of 3.5 kg/cm² to prepare a crude emulsion. Separately, 130 parts of a 50/50 (weight) mixture of beef tallow trimethylammonium chloride and dicoco dimethyl ammonium, 870 parts water, and 4 parts powdered sodium hydroxide were placed in a 3 L four-neck flask, followed by dissolution to homogeneity and then maintenance at a liquid temperature of 85°C with slow stirring. The crude emulsion was gradually dripped into this aqueous solution over 2 hours. After addition, emulsion polymerization was carried out by maintenance at the same temperature for 3 hours. After polymerization, the pH was adjusted to 7.0 using glacial acetic acid. The product was a microemulsion (emulsion D) having an average particle size of 0.10 micrometers. When this microemulsion was broken with methanol, the extracted oil was found to be a hydroxyl-terminated dimethylpolysiloxane having a viscosity of 1,200 centistokes.

760 parts water was added to 40 parts of this emulsion D to prepare an outer-surface tire molding release agent having a silicone fraction of 1 wt%. 500 cm³ of this was placed in a household juicer mixer and then processed for 60 minutes at 4,000 rpm. The condition of the emulsion was inspected visually after this processing: no floating oil or oil adhering at the glass walls was observed, indicating its useability as an outer-surface release agent for tire molding.

### Example 5

Tire inner liner rubber sheets (100 mm x 150 mm x 5.3 mm) were respectively treated with either the microemulsion dilution of Example 2 having a silicone concentration of 1 wt% and processed in the juicer mixer for 2 hours, or with this microemulsion dilution which had not been subjected to the processing. This was then overlaid with polyester film (thickness = 50 micrometers), and stainless steel plates were then placed on the top and bottom to give an assembly which was subsequently vulcanized in a compression molder at 150°C/50 kg/cm². After pressing for 15 minutes and removal from the machine, the peelability between the polyester film and rubber sheet was investigated. Peeling was easy, and there was absolutely no difference in peelability before and after processing in the juicer mixer.

### Example 6

Tire inner liner rubber sheets (100 mm x 150 mm x 5.3 mm) were respectively treated with either the microemulsion dilution of Example 3 having a silicone concentration of 1 wt% and processed in the juicer mixer for 2 hours, or with this microemulsion dilution which had not been subjected to the processing. This was then overlaid with polyester film (thickness = 50 micrometers), and stainless steel plates were then placed on the top and bottom to give an assembly which was subsequently vulcanized in a compression molder at 150°C/50 kg/cm². After pressing for 15 minutes and removal from the machine, the peelability between the polyester film and rubber sheet was investigated. Peeling was easy, and there was absolutely no difference in peelability before and after processing in the juicer mixer.

### Example 7

Tire inner liner rubber sheets (100 mm x 150 mm x 5.3 mm) were respectively treated with either the microemulsion dilution of Example 4 having a silicone concentration of 1 wt% and processed in the juicer mixer for 2 hours, or with this microemulsion dilution which had not been subjected to the processing. This was then overlaid with polyester film (thickness = 50 micrometers), and stainless steel plates were then placed on the top and bottom to give an assembly which was subsequently vulcanized in a compression molder at 150°C/50 kg/cm². After pressing for 15 minutes and removal from the machine, the peelability between the polyester film and rubber sheet was investigated. Peeling was easy, and there was absolutely no difference in peelability before and after processing in the juicer mixer.

### Comparison Example 3

Tire inner liner rubber sheets (100 mm x 150 mm x 5.3 mm) were respectively treated with either the microemulsion dilution of Comparison Example 2 having a silicone concentration of 1 wt% and processed in the juicer mixer for 2 hours, or with this microemulsion dilution which had not been subjected to the processing. This was overlaid with polyester film (thickness = 50 micrometers), and stainless steel plates were then placed on the top and bottom to give an assembly which was subsequently vulcanized in a compression molder at 150°C/50 kg/cm². After pressing for 15 minutes and removal from the machine, the peelability between the polyester film and rubber sheet was investigated. Peeling was easy for the release agent not subjected to processing in the juicer mixer, but peeling was relatively difficult for the release agent which had been subjected to this processing.

### Example 8

Polystyrene films (thickness = 500 micrometers x 30 cm x 30 cm) were sprayed on a single side with one or the other of the following: the microemulsion dilution of Example 2 having a silicone concentration of 1 wt%, after processing in the juicer mixer for 2 hours and after then being further diluted 10-fold with water; or this microemulsion dilution, without the processing, but further diluted 10-fold with water. Another sheet of polystyrene film was overlaid on each, and the assembly was then pressed for 10 minutes at 70°C/20 kg/cm² in a press molder. The peelability was investigated after removal from the machine: both microemulsions, that is, before and after processing in the juicer mixer, had an excellent wettability, and peeling was easy.

### Example 9

Polystyrene films (thickness = 500 micrometers x 30 cm x 30 cm) were sprayed on a single side with one or the other of the following: the microemulsion dilution of Example 3 having a silicone concentration of 1 wt%, after processing in the juicer mixer for 2 hours and after then being further diluted 10-fold with water; or this microemulsion dilution, without the processing, but further diluted 10-fold with water. Another sheet of polystyrene film was overlaid on each, and the assembly was then pressed for 10 minutes at 70°C/20 kg/cm² in a press molder. The peelability was investigated after removal from the machine: both microemulsions, that is, before and after processing in the juicer mixer, had an excellent wettability and peeling was easy.

### Example 10

Polystyrene films (thickness = 500 micrometers x 30 cm x 30 cm) were sprayed on a single side with one or the other of the following: the microemulsion dilution of Example 4 having a silicone concentration of 1 wt%, after processing in the juicer mixer for 2 hours and after then being further diluted 10-fold with water; or this microemulsion dilution, without the processing, but further diluted 10-fold with water. Another sheet of polystyrene film was overlaid on each, and the assembly was then pressed for 10 minutes at 70°C/20 kg/cm² in a press molder. The peelability was investigated after removal from the machine: both microemulsions, that is, before and after processing in the juicer mixer, had an excellent wettability, and peeling was easy.

### Comparison Example 4

Polystyrene films (thickness = 500 micrometers x 30 cm x 30 cm) were sprayed on a single side with one or the other of the following: the microemulsion dilution of Comparison Example 2 having a silicone concentration of 1 wt%, after processing in the juicer mixer for 2 hours and after then being further diluted 10- fold with water; or this microemulsion dilution, without the processing, but further diluted 10-fold with water. Another sheet of polystyrene film was overlaid on each, and the assembly was then pressed for 10 minutes at 70°C/20 kg/cm² in a press molder. The peelability was investigated after removal from the machine: for the emulsion not subjected to processing in the juicer mixer, peeling was difficult in part; for the emulsion subjected to this processing, peeling was impossible in part.

## Claims

1. A method for obtaining release from a solid substrate comprising
(I) emulsion polymerizing a crude emulsion comprising a cyclic organopolysiloxane of the formula (R₂SiO)ₙ, surfactant and water, wherein the groups R are identical or different alkyl, substituted alkyl, alkenyl, aryl or substituted aryl groups and n is an integer having a value of 3 to 10, to provide an organopolysiloxane microemulsion, wherein the average particle size of said microemulsion after polymerization is equal to or less than 0.15 micrometers, whereby this parameter is measured as specified in the description, and its viscosity, after the emulsion is broken, is at least 100 mm²/s (centistokes) at 25°C,
(II) preparing a silicone release agent having said organopolysiloxane microemulsion as silicone component,
(III) coating said release agent on the surface to be released,
(IV) moulding an article of rubber, or a thermoplastic or thermosetting resin against said coated substrate and
(V) removing the article from said substrate.

## Patentansprüche

1. Verfahren, um eine Trennung von einem festen Substrat zu erhalten, umfassend, daß man
(I) eine rohe Emulsion, die ein cyclisches Organopolysiloxan der Formel (R₂SiO)ₙ, Tensid und Wasser umfaßt, emulsionspolymerisiert, wobei die Gruppen R identische oder verschiedene Alkyl-, substituierte Alkyl-, Alkenyl-, Aryl- oder substituierte Arylgruppen sind und n eine ganze Zahl mit einem Wert von 3 bis 10 ist, um eine Organopolysiloxanmikroemulsion zu liefern, worin die durchschnittliche Teilchengröße der Mikroemulsion nach der Polymerisation ≦ 0,15 µm ist, wobei dieser Parameter gemessen wird, wie in der Beschreibung angegeben, und eine Viskosität hat, nachdem die Emulsion gebrochen wurde, von mindestens 100 mm²/s (Centistoke) bei 25°C,
(II) ein Silicontrennmittel herstellt mit der Organopolysiloxanmikroemulsion als Siliconkomponente
(III) das Trennmittel auf die zu trennende Oberfläche aufträgt,
(IV) einen Gegenstand aus Kautschuk oder einem thermoplastischen oder hitzehärtbaren Harz gegen das beschichtete Substrat preßt und
(V) den Gegenstand von dem Substrat entfernt.

## Revendications

1. Un procédé pour assurer le démoulage d'un substrat solide comprenant les opérations consistant :
(I) à polymériser en émulsion une émulsion brute comprenant un organopolysiloxane cyclique de formule (R₂SiO)ₙ, un agent tensioactif et de l'eau, les groupes R, identiques ou différents, étant des groupes alkyles, alkyles substitués, alcényles, aryles ou aryles substitués et n étant un nombre entier ayant une valeur de 3 à 10, pour obtenir une microémulsion d'organopolysiloxane, la grosseur moyenne des particules de ladite microémulsion après polymérisation, mesurée comme spécifié dans la description, étant inférieure ou égale à 0,15 micromètre, et sa viscosité, après rupture de l'émulsion, étant d'au moins 100 mm²/s (centistokes) à 25°C,
(II) à préparer un agent de démoulage silicone renfermant ladite microémulsion d'organopolysiloxane en tant que composant silicone,
(III) à appliquer ledit agent de démoulage en revêtement sur la surface de démoulage,
(IV) à mouler un article en caoutchouc, ou en une résine thermoplastique ou thermodurcissable contre ledit substrat revêtu, et
(V) à séparer l'article dudit substrat.
